# EUROPEAN PATENT APPLICATION

(11) **EP 2 522 844 A2**
(43) Date of publication of application: **14.11.2012**
(21) Application number: 12165670.6
(22) Date of filing: 26.04.2012
(51) Int. Cl.: F02G 5/00, B60H 1/32

(54) **Rankine cycle apparatus**

(30) Priority: 09.05.2011 JP 2011104373
(71) Applicant: KABUSHIKI KAISHA TOYOTA JIDOSHOKKI, Kariya-shi, Aichi-ken 448-8671 (JP)
(72) Inventor: Mori, Hidefumi, Kariya-shi, Aichi 448-8671 (JP); Iguchi, Masao, Kariya-shi, Aichi 448-8671 (JP); Enokijima, Fuminobu, Kariya-shi, Aichi 448-8671 (JP)
(74) Representative: TBK

(57) **Abstract**

The present invention provides a Rankine cycle apparatus that is mounted in a vehicle and includes a Rankine cycle circuit and a refrigeration cycle circuit. The Rankine cycle circuit and the refrigeration cycle circuit each include a condenser for cooling a corresponding type of working fluid and a receiver, which is connected to the condenser. The two condensers are arranged side by side in the upward-downward direction and each have a first end and a second end in the vehicle width direction. A first receiver, which is one of the receivers, is arranged outward of the first end in the vehicle width direction. A second receiver, which is the other one of the receivers, is located outward of the second end in the vehicle width direction.

## Description

### BACKGROUND OF THE INVENTION

The present invention relates to a Rankine cycle apparatus mounted in a vehicle and having a Rankine cycle condenser and a refrigeration cycle condenser, which are arranged side by side in an upward-downward direction.

Japanese Laid-Open Patent Publication No. 2010-188949 discloses a vehicle having a waste heat recovery system serving as a Rankine cycle apparatus having a refrigeration cycle circuit and a Rankine cycle circuit in combination. In the vehicle with the waste heat recovery system, the Rankine cycle circuit includes a pump, a heater, an expander, a Rankine cycle condenser, and a Rankine cycle gas-liquid separator (a receiver). The refrigeration cycle circuit has a compressor, a refrigeration cycle condenser, a refrigeration cycle gas-liquid separator (a receiver), an expansion valve, and an evaporator.

The Rankine cycle condenser and the refrigeration cycle condenser are arranged side by side in a forward-rearward direction of the vehicle. A first motor fan is arranged in the vicinity of the Rankine cycle condenser and the refrigeration cycle condenser. The first motor fan directs air onto the condensers to promote heat radiation from working fluid (refrigerant) in the condensers, thus liquefying the working fluid. The liquefied working fluid is supplied to the corresponding one of the gas-liquid separators. The gas-liquid separators each include a strainer and a desiccant agent for removing foreign matter and water from the supplied working fluid. Each gas-liquid separator thus removes foreign matter and water from the working fluid, separates gas from liquid in the working fluid, and temporarily retains the separated liquid working fluid.

As described in Japanese Laid-Open Patent Publication No. 2010-188949, the Rankine cycle gas-liquid separator is arranged on one of the opposite sides of the Rankin cycle condenser in the vehicle width direction. The refrigeration cycle gas-liquid separator is located on one of the opposite sides of the refrigeration cycle condenser in the vehicle width direction. The two gas-liquid separators are arranged on the same sides of the corresponding condensers in the vehicle width direction. Since the working fluid is typically introduced through a lower portion of each gas-liquid separator, the gas-liquid separators are arranged such that the height of the lower end of each gas-liquid separator is equal to the height of the lower end of the corresponding condenser.

For a Rankine cycle apparatus having a refrigeration cycle and a Rankine cycle in combination, a Rankine cycle condenser and a refrigeration cycle condenser may be arranged side by side in an upward-downward direction to save space in vehicles. In this case, as described in Japanese Laid-Open Patent Publication No. 2010-188949, the gas-liquid separators, which are arranged on the same side of the corresponding condensers in the vehicle width direction, are arranged at overlapping positions in the upward-downward direction. The height of the lower end of each gas-liquid separator is equal to the height of the corresponding gas-liquid separator. As a result, sufficient height cannot be ensured for the gas-liquid separator corresponding to the lower one of the two condensers due to the other one of the gas-liquid separators, which is located above.

As has been described, the functions of each gas-liquid separator include removal of foreign matter, separation of gas from liquid, and retention. The gas-liquid separator is allowed to remove foreign matter and separate gas from liquid by increasing the distance by which the working fluid travels in the gas-liquid separator. The gas-liquid separator is allowed to retain the liquid by increasing the volume of the gas-liquid separator. Accordingly, it is important to ensure a sufficient height for the gas-liquid separators. However, if the two gas-liquid separators are arranged side by side in an upward-downward direction, the height of the lower one of the gas-liquid separators cannot be ensured and thus performance of the lower gas-liquid separator is decreased.

To ensure sufficient height for the lower one of the gas-liquid separators, the lower gas-liquid separator may be arranged forward of the two condensers in the forward-rearward direction of the vehicle. However, in this case, since a vehicle with a typical configuration only has a limited space forward of the condensers, space must be provided for installing the gas-liquid separator. As a result, if the gas-liquid separators are mounted in the vehicle, it is disadvantageous to arrange either one of the gas-liquid separators forward of the condensers.

### SUMMARY OF THE INVENTION

Accordingly, it is an objective of the present invention to provide a Rankine cycle apparatus that maintains sufficient performance for a receiver and is easily mountable in a vehicle.

To achieve the foregoing objective and in accordance with one aspect of the present invention, a Rankine cycle apparatus that is mounted in a vehicle is provided. The Rankine cycle apparatus includes a Rankine cycle circuit and a refrigeration cycle circuit. The Rankine cycle circuit includes a Rankine cycle condenser for cooling a Rankine cycle working fluid and a Rankine cycle receiver connected to the Rankine cycle condenser. The refrigeration cycle circuit includes a refrigeration cycle condenser for cooling a refrigeration cycle working fluid and a refrigeration cycle receiver connected to the refrigeration cycle condenser. The two condensers are arranged side by side in an upward-downward direction. The condensers each have a first end and a second end in a vehicle width direction. A first receiver, which is one of the receivers, is arranged outward of the first end in the vehicle width direction, and a second receiver, which is the other one of the receivers, is located outward of the second end in the vehicle width direction.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a circuit diagram representing a Rankine cycle apparatus according to a first embodiment of the present invention;
Fig. 2A is a front view schematically showing the Rankine cycle apparatus illustrated in Fig. 1;
Fig. 2B is a plan view schematically showing the Rankine cycle apparatus illustrated in Fig. 1;
Fig. 3 is a front view schematically showing a Rankine cycle apparatus according to a second embodiment of the invention;
Fig. 4 is a plan view schematically showing a Rankine cycle apparatus of a modification; and
Fig. 5 is a plan view schematically showing a Rankine cycle apparatus of another modification.

### DETAILED DESCRIPTION OF THE PREFERRED EMBODIMENTS

### (First Embodiment)

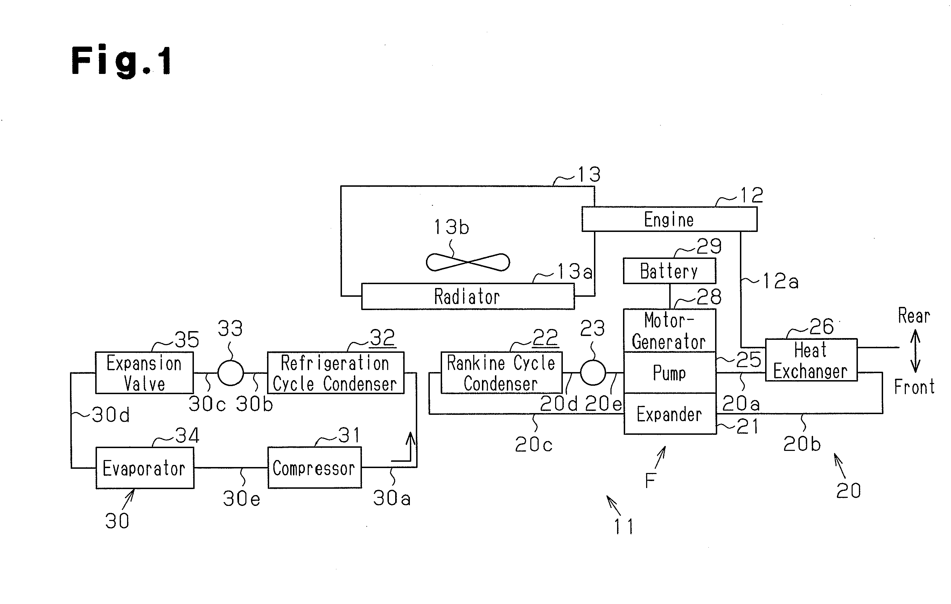

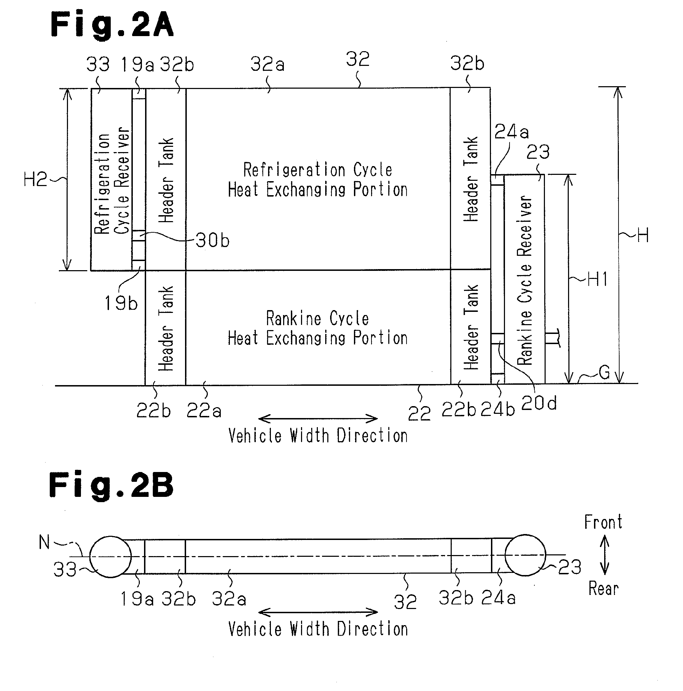

A first embodiment of the present invention will now be described with reference to Figs. 1 and 2. For the description below, the direction extending in the proceeding direction of the vehicle is defined as the forward-rearward direction. The direction perpendicular to the forward-rearward direction is defined as the width direction of the vehicle.

As shown in Fig. 1, a Rankine cycle apparatus 11, which is mounted in a vehicle, includes a refrigeration cycle circuit 30 and a Rankine cycle circuit 20 in combination. The refrigeration cycle circuit 30 and the Rankine cycle circuit 20 are separate circuits that are independent from each other. Refrigeration cycle working fluid circulates in the refrigeration cycle circuit 30 to perform air-conditioning for the vehicle. Rankine cycle working fluid circulates in the Rankine cycle circuit 20.

A coolant water circulation path 13 is connected to an engine 12 of the vehicle. A radiator 13a is arranged in the coolant water circulation path 13. The radiator 13a is mounted in the vehicle and extends in the vehicle width direction. The longitudinal direction of the radiator 13a extends parallel to the vehicle width direction. A blower fan 13b is arranged rearward of the radiator 13a. After cooling the engine 12, coolant water is cooled by the radiator 13a using air flow either produced mainly through movement of the vehicle when the vehicle travels or generated by the blower fan 13b if the vehicle stops.

The Rankine cycle circuit 20 will hereafter be described. The Rankine cycle circuit 20 has an expander 21, a Rankine cycle condenser 22, a Rankine cycle receiver 23, a pump 25, and a heat exchanger 26. These components are connected together in a loop-like manner.

Specifically, in the Rankine cycle circuit 20, the outlet of the pump 25 is connected to the inlet of a heat exchanger 26 through a first Rankine cycle passage 20a. The heat exchanger 26 is arranged in an exhaust passage 12a, which is connected to the engine 12. After having been pumped out from the pump 25, the Rankine cycle working fluid is heated by the heat exchanger 26 through heat exchange with exhaust gas, which is received from the engine 12.

The outlet of the heat exchanger 26 is connected to the inlet of the expander 21 through a second Rankine cycle passage 20b. The expander 21 expands the Rankine cycle working fluid that has been heated by the heat exchanger 26. The outlet of the expander 21 is connected to the inlet of a Rankine cycle condenser 22 through a third Rankine cycle passage 20c. The Rankine cycle condenser 22 is arranged forward of the radiator 13a. After having been expanded by the expander 21, the Rankine cycle working fluid is cooled by the Rankine cycle condenser 22 using air flow either produced mainly through movement of the vehicle when the vehicle travels or supplied by the blower fan 13b when the vehicle stops. In the Rankine cycle condenser 22, the Rankine cycle working fluid is cooled, condensed, and liquefied.

The outlet of the Rankine cycle condenser 22 is connected to the inlet of a Rankine cycle receiver 23 through a fourth Rankine cycle passage 20d. After having been cooled (liquefied) by the Rankine cycle condenser 22, Rankine cycle working fluid is sent into the Rankine cycle receiver 23. The Rankine cycle receiver 23 temporarily retains the Rankine cycle working fluid to supply the Rankine cycle working fluid to the pump 25 in correspondence with the output of mechanical energy through the Rankine cycle circuit 20 (a retaining function).

A strainer and desiccant agent (neither is shown) for removing foreign matter and water from Rankine cycle working fluid are sealed in the Rankine cycle receiver 23 (a foreign matter removing function). When some of the Rankine cycle working fluid fails to liquefy in the Rankine cycle condenser 22, such Rankine cycle working fluid is introduced into the Rankine cycle receiver 23 as gas in some cases. Accordingly, the Rankine cycle receiver 23 retains liquefied Rankine cycle working fluid in a bottom portion (a lower portion) and gaseous Rankine cycle working fluid in a top portion (an upper portion). The Rankine cycle receiver 23 thus separates the gas Rankine cycle working fluid from the liquid (a gas-liquid separating function). The bottom portion of the Rankine cycle receiver 23 is connected to a fifth Rankine cycle passage 20e for sending out the liquid Rankine cycle working fluid. The fifth Rankine cycle passage 20e is connected to the inlet of the pump 25.

In the first embodiment, the expander 21 and the pump 25 are arranged in the housing for a complex fluid machine F. The housing accommodates a motor-generator 28, which functions as either a motor or a generator. The motor-generator 28 is connected to a battery 29. The battery 29 stores electric power produced by the motor-generator 28.

In the Rankine cycle circuit 20, as the electric power is supplied from the battery 29 to the motor-generator 28, the motor-generator 28 is actuated as an electric motor to drive the pump 25. As the pump 25 pumps out Rankine cycle working fluid, the Rankine cycle working fluid is heated by the heat exchanger 26 through heat exchange with the exhaust gas from the engine 12 and receives thermal energy. The heated Rankine cycle working fluid is expanded by the expander 21. Through such expansion, the expander 21 outputs mechanical energy (drive force). The drive force drives the expander 21 and operates the motor-generator 28 to actuate the pump 25. In this state, the rotation speed of the motor-generator 28 is controlled in correspondence with the amount of waste heat from the engine 12. The power produced by the expander 21, from which the power necessary for actuating the pump 25 has been excluded, is converted into electric power, which charges the battery 29.

After expansion causes a pressure drop in Rankine cycle working fluid, the Rankine cycle working fluid is cooled and liquefied by the Rankine cycle condenser 22 and temporarily retained in the Rankine cycle receiver 23. The Rankine cycle working fluid retained in the Rankine cycle receiver 23 is drawn into the pump 25 in correspondence with the output of the expander 21. Afterwards, as has been described, the Rankine cycle working fluid flows through the expander 21, the Rankine cycle condenser 22, the Rankine cycle receiver 23, the pump 25, and the heat exchanger 26, thus circulating in the Rankine cycle circuit 20.

The refrigeration cycle circuit 30 will hereafter be described.

The refrigeration cycle circuit 30 has a compressor 31, a refrigeration cycle condenser 32, a refrigeration cycle receiver 33, an expansion valve 35, and an evaporator 34. These components are connected together in a loop-like manner. Specifically, in the refrigeration cycle circuit 30, the outlet of the compressor 31 is connected to the inlet of the refrigeration cycle condenser 32 through a first refrigeration cycle passage 30a. The refrigeration cycle condenser 32 is located forward of the radiator 13a. After having been compressed by the compressor 31, refrigeration cycle working fluid is cooled by the refrigeration cycle condenser 32 using air flow either produced mainly through movement of the vehicle when the vehicle travels or supplied by the blower fan 13b when the vehicle stops. In the refrigeration cycle condenser 32, the refrigeration cycle working fluid is cooled, condensed, and liquefied.

The outlet of the refrigeration cycle condenser 32 is connected to a refrigeration cycle receiver 33 through a second refrigeration cycle passage 30b. After the refrigeration cycle condenser 32 cools (liquefies) the refrigeration cycle working fluid, the refrigeration cycle receiver 33 temporarily retains the refrigeration cycle working fluid to supply the refrigeration cycle working fluid to the evaporator 34 in correspondence with refrigerating load (a retaining function).

A strainer and a desiccant agent (neither is shown) for removing foreign matter and water from the refrigeration cycle circuit 30 are sealed in the refrigeration cycle receiver 33 (a foreign matter removing function). When some of the refrigeration cycle working fluid fails to liquefy in the refrigeration cycle condenser 32, such refrigeration cycle working fluid is supplied to the refrigeration cycle receiver 33 as gas in some cases. Accordingly, the refrigeration cycle receiver 33 retains liquefied refrigeration cycle working fluid in a bottom portion (a lower portion) and gas refrigeration cycle working fluid in a top portion (an upper portion). The refrigeration cycle receiver 33 thus separates the gas refrigeration cycle working fluid from the liquid (a gas-liquid separating function). The bottom portion of the refrigeration cycle receiver 33 is connected to a third refrigeration cycle passage 30c for sending out the liquid refrigeration cycle working fluid. The third refrigeration cycle passage 30c is connected to the inlet of the expansion valve 35.

The expansion valve 35 depressurizes and expands the refrigeration cycle working fluid that has been cooled by the refrigeration cycle condenser 32. The outlet of the expansion valve 35 is connected to a fourth refrigeration cycle passage 30d. The fourth refrigeration cycle passage 30d is connected to the inlet of the evaporator 34. The evaporator 34 evaporates the refrigeration cycle working fluid that has been depressurized by the expansion valve 35. The outlet of the evaporator 34 is connected to a fifth refrigeration cycle passage 30e. The fifth refrigeration cycle passage 30e is connected to the inlet of the compressor 31.

The Rankine cycle condenser 22, the refrigeration cycle condenser 32, the Rankine cycle receiver 23, and the refrigeration cycle receiver 33 are arranged in the manner described below.

With reference to Fig. 2A, the Rankine cycle condenser 22 has a Rankine cycle heat exchanging portion 22a, which extends in the vehicle width direction, and a pair of header tanks 22b. The header tanks 22b are arranged on opposite sides of the Rankine cycle heat exchanging portion 22a in the vehicle width direction. The longitudinal direction of the Rankine cycle heat exchanging portion 22a is parallel to the vehicle width direction. The Rankine cycle heat exchanging portion 22a and the two header tanks 22b are integral. The Rankine cycle heat exchanging portion 22a has a fin (not shown) and a tube (not shown), which is passed through the fin. The interior of the tube communicates with the interiors of the header tanks 22b. The Rankine cycle working fluid in the first header tank 22b, which is one of the header tanks 22b, flows through the Rankine cycle heat exchanging portion 22a via the tube and reaches the second header tank 22b. The Rankine cycle heat exchanging portion 22a is cooled through heat exchange between the Rankine cycle working fluid in the tube and the gas in the vicinity of the fin.

The refrigeration cycle condenser 32 has a refrigeration cycle heat exchanging portion 32a, which extends in the vehicle width direction, and a pair of header tanks 32b. The header tanks 32b are arranged on opposite sides of the refrigeration cycle heat exchanging portion 32a in the vehicle width direction. The longitudinal direction of the refrigeration cycle heat exchanging portion 32a is parallel to the vehicle width direction. The refrigeration cycle heat exchanging portion 32a and the two header tanks 32b are integral. The refrigeration cycle heat exchanging portion 32a has a fin (not shown) and a tube (not shown), which is passed through the fin. The interior of the tube communicates with the interiors of the header tanks 32b. The refrigeration cycle working fluid in the first header tank 32b, which is one of the header tanks 32b, flows through the refrigeration cycle heat exchanging portion 32a via the tube and reaches the second header tank 32b. The refrigeration cycle heat exchanging portion 32a is cooled through heat exchange between the refrigeration cycle working fluid in the tube and the gas in the vicinity of the fin.

The Rankine cycle condenser 22 and the refrigeration cycle condenser 32 are arranged side by side at overlapping positions in the upward-downward direction. In the first embodiment, the Rankine cycle condenser 22 is fixed to a mounting surface G of the vehicle. The refrigeration cycle condenser 32 is arranged above the Rankine cycle condenser 22. The thickness of the Rankine cycle condenser 22 in the forward-rearward direction of the vehicle is equal to the thickness of the refrigeration cycle condenser 32 in the forward-rearward direction of the vehicle. As a result, with reference to Fig. 2B, only the refrigeration cycle condenser 32 is visible from above.

As illustrated in Fig. 2A, the Rankine cycle receiver 23 is arranged outward with respect to the right end (a first end) of each of the two condensers 22, 32 in the vehicle width direction, which is one of the opposite ends of each condenser 22, 32 in the vehicle width direction. The upper end of the Rankine cycle receiver 23 is fixed to the header tank 32b on the right side of the refrigeration cycle condenser 32 by an upper fixing member 24a. The lower end of the Rankine cycle receiver 23 is fixed to the header tank 22b on the right side of the Rankine cycle condenser 22 by a lower fixing member 24b. The fourth Rankine cycle passage 20d connects a lower portion of the header tank 22b on the right side to a lower portion of the Rankine cycle receiver 23.

The height H1 of the Rankine cycle receiver 23 is smaller than or equal to the total height H, which is the sum of the heights of the two condensers 22, 32. The Rankine cycle receiver 23 is arranged such that the lower end of the Rankine cycle receiver 23 is at the equal height to the height of the lower end of the Rankine cycle condenser 22 and that the upper end of the Rankine cycle receiver 23 is lower than the upper end of the refrigeration cycle condenser 32 and higher than the lower end of the refrigeration cycle condenser 32. In other words, the Rankine cycle receiver 23 is arranged such that the upper end of the Rankine cycle receiver 23 is located at a position corresponding to a point along the height of the refrigeration cycle condenser 32.

The refrigeration cycle receiver 33 is arranged outward with respect to the left end (a second end) of each of the condensers 22, 32 in the vehicle width direction, which is one of the opposite ends of each condenser 22, 32 in the vehicle width direction. The upper end of the refrigeration cycle receiver 33 is fixed to the header tank 32b on the left side of the refrigeration cycle condenser 32 by an upper fixing member 19a. The lower end of the refrigeration cycle receiver 33 is fixed to the header tank 32b on the left side of the refrigeration cycle condenser 32 by a lower fixing member 19b. The second refrigeration cycle passage 30b connects a lower portion of the header tank 32b on the left side to a lower portion of the refrigeration cycle receiver 33.

The height H2 of the refrigeration cycle receiver 33 is smaller than or equal to the total height H, which is the sum of the heights of the two condensers 22, 32. The refrigeration cycle receiver 33 is arranged such that the upper end and the lower end of the refrigeration cycle receiver 33 are located at heights equal to the respective heights of the upper end and the lower end of the refrigeration cycle condenser 32.

With reference to Fig. 2B, the plane in the vehicle width direction that extends through the refrigeration cycle condenser 32 and the Rankine cycle condenser 22 in the longitudinal directions of the condensers 32, 22 is defined as a reference plane N. The core of the Rankine cycle receiver 23 and the core of the refrigeration cycle receiver 33 are located on the reference plane N. The Rankine cycle receiver 23 and the refrigeration cycle receiver 33 are arranged on the corresponding horizontal sides of the condensers 22, 32.

Operation of the Rankine cycle apparatus 11 will hereafter be described.

While circulating in the Rankine cycle circuit 20 in the Rankine cycle apparatus 11, Rankine cycle working fluid is cooled and liquefied by the Rankine cycle condenser 22 and introduced into the Rankine cycle receiver 23. The Rankine cycle receiver 23 is located outward with respect to the right ends of the Rankine cycle condenser 22 and the refrigeration cycle condenser 32. A sufficient height is ensured for the Rankine cycle receiver 23 in such a range that the height of the upper end of the Rankine cycle receiver 23 is prevented from exceeding the height of the upper end of the refrigeration cycle condenser 32. A sufficient volume is also ensured for the Rankine cycle receiver 23. As a result, a sufficient distance is ensured for the Rankine cycle working fluid to circulate in the Rankine cycle receiver 23. Removal of foreign matter from the Rankine cycle working fluid and gas-liquid separation in the Rankine cycle working fluid are thus accomplished. Further, a sufficient volume of Rankine cycle working fluid is temporarily retained in the Rankine cycle receiver 23.

While circulating in the refrigeration cycle circuit 30 in the Rankine cycle apparatus 11, refrigeration cycle working fluid is cooled and liquefied by the refrigeration cycle condenser 32 and introduced into the refrigeration cycle receiver 33. The refrigeration cycle receiver 33 is located outward with respect to the left ends of the Rankine cycle condenser 22 and the refrigeration cycle condenser 32. A sufficient height is ensured for the refrigeration cycle receiver 33 in such a range that the height of the upper end of the refrigeration cycle receiver 33 is prevented from exceeding the height of the upper end of the refrigeration cycle condenser 32. This ensures a sufficient distance for the refrigeration cycle working fluid to circulate in the refrigeration cycle receiver 33. Removal of foreign matter from the refrigeration cycle working fluid and gas-liquid separation in the refrigeration cycle working fluid are thus accomplished. Further, a sufficient volume of refrigeration cycle working fluid is temporarily retained in the refrigeration cycle receiver 33.

The first embodiment has the advantages described below.
(1) In the Rankine cycle apparatus 11 having the Rankine cycle circuit 20 and the refrigeration cycle circuit 30 in combination, the refrigeration cycle condenser 32 is arranged side by side with and above the Rankine cycle condenser 22. In the vehicle width direction, the Rankine cycle receiver 23 is located outward with respect to the right ends of the Rankine cycle condenser 22 and the refrigeration cycle condenser 32 and the refrigeration cycle receiver 33 is arranged outward with respect to the left ends of the condensers 22, 32. This makes it unnecessary to arrange the Rankine cycle receiver 23 and the refrigeration cycle receiver 33 side by side in the upward-downward direction. Since the refrigeration cycle receiver 33 is not located above the Rankine cycle receiver 23, which is arranged below, the refrigeration cycle receiver 33 does not restrict the height of the Rankine cycle receiver 23. As a result, even when the lower ends of the receivers 23, 33 are at the equal heights to the heights of the lower ends of the condensers 22, 32, the height of the upper end of each receiver 23, 33 may be set flexibly in such a range that the height of the upper end of the receiver 23, 33 is prevented from exceeding the height of the upper end of the refrigeration cycle condenser 32, which is located above. This ensures a sufficient height and a sufficient volume for the receivers 23, 33, thus reliably bringing about functions of foreign matter removal, gas-liquid separation, and retention.
(2) If the two receivers 23, 33 are arranged side by side in the upward-downward direction, the Rankine cycle receiver 23 having a sufficient height, which is located below, may be arranged forward of the condensers 22, 32 to reliably maintain the sufficient height of the Rankine cycle receiver 23. However, a vehicle having a typical configuration has an extremely limited space forward of the condensers 22, 32 in the vehicle. Accordingly, if the Rankine cycle receiver 23 must be arranged forward of the condensers 22, 32, space must be provided for mounting the Rankine cycle receiver 23. In the first embodiment, the Rankine cycle receiver 23 and the refrigeration cycle receiver 33 are arranged one by one at the positions outward of the opposite ends in the vehicle width direction. This makes it unnecessary to ensure space for installing the Rankine cycle receiver 23 at a position forward of the condensers 22, 32, thus facilitating mounting of the Rankine cycle receiver 23.
(3) When a front portion of the vehicle is hit in a car crash, front portions of the condensers 22, 32 are likely to be directly impacted. In the first embodiment, the Rankine cycle receiver 23, which has a sufficient height, and the refrigeration cycle receiver 33 are arranged separately on the opposite sides in the vehicle width direction, not forward of the condensers 22, 32. This prevents the receivers 23, 33 from being damaged in a car crash.
(4) The Rankine cycle receiver 23 is fixed to the right ends of the refrigeration cycle condenser 32 and the Rankine cycle condenser 22 through the upper fixing member 24a and the lower fixing member 24b, respectively. The refrigeration cycle receiver 33 is fixed to the left end of the refrigeration cycle condenser 32 through the upper fixing member 19a and the lower fixing member 19b. The receivers 23, 33 are thus fixed to the corresponding condenser(s) 22, 32, instead of the mounting surface G in the vehicle. This arrangement blocks transmission of vibration from the vehicle to the receivers 23, 33, thus preventing vibration in the receivers 23, 33.
(5) The reference plane N, which is defined in the vehicle width direction to extend through the Rankine cycle condenser 22 and the refrigeration cycle condenser 32, extends through the receivers 23, 33. This reduces the size of the space for installing the two receivers 23, 33 and the corresponding condensers 22, 32 in the forward-rearward direction of the vehicle.
(6) The Rankine cycle condenser 22 is configured by the Rankine cycle heat exchanging portion 22a and the two header tanks 22b, which are arranged on the opposite sides of the Rankine cycle heat exchanging portion 22a in the vehicle width direction. The refrigeration cycle condenser 32 is configured by the refrigeration cycle heat exchanging portion 32a and the two header tanks 32b, which are formed on the opposite sides of the refrigeration cycle heat exchanging portion 32a in the vehicle width direction. The Rankine cycle receiver 23 is arranged outward of the header tank 22b on the right side of the Rankine cycle condenser 22. The refrigeration cycle receiver 33 is located outward of the header tank 32b on the left side of the refrigeration cycle condenser 32. This arrangement rapidly sends working fluid from the header tanks 22b, 32b into the corresponding receivers 23, 33.
(7) The refrigeration cycle receiver 33 is not arranged above the Rankine cycle receiver 23, which is to be located below. The Rankine cycle receiver 23 is thus not restricted by the height of the refrigeration cycle receiver 33. This ensures a sufficient height for each of the receivers 23, 33. As a result, the Rankine cycle receiver 23 performs sufficient gas-liquid separation on the Rankine cycle working fluid. The pump 25 thus avoids receiving gaseous Rankine cycle working fluid, thus preventing a decrease in volume efficiency of the pump 25.

### (Second Embodiment)

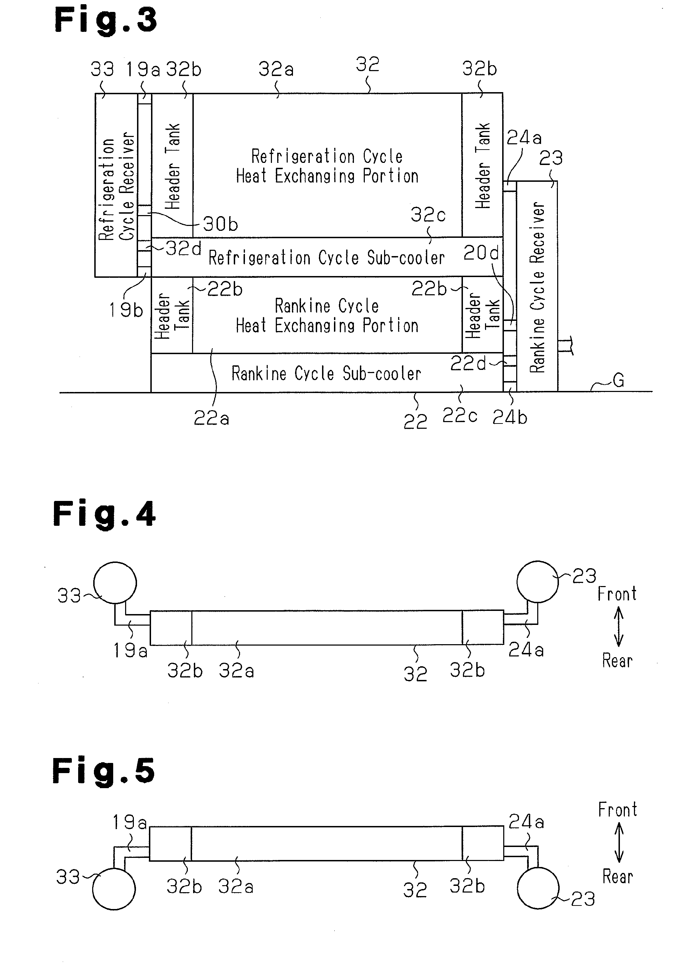

A second embodiment of the present invention will now be described with reference to Fig. 3. In the description below, the same or like reference numerals are given to the components of the second embodiment that are the same as or like the corresponding components of the first embodiment. Repeated description of the components is omitted or simplified herein.

As shown in Fig. 3, the Rankine cycle condenser 22 has a Rankine cycle sub-cooler 22c, which is formed in a lower portion of the Rankine cycle condenser 22. The Rankine cycle heat exchanging portion 22a, the two header tanks 22b, and the Rankine cycle sub-cooler 22c are integral. The Rankine cycle sub-cooler 22c and the Rankine cycle receiver 23 are connected together through a communication passage 22d. The Rankine cycle condenser 22 subjects Rankine cycle working fluid to heat exchange through the Rankine cycle heat exchanging portion 22a. The Rankine cycle working fluid then flows into the two header tanks 22b and is supplied to the Rankine cycle sub-cooler 22c via the Rankine cycle receiver 23. After some Rankine cycle working fluid fails to liquefy in the Rankine cycle heat exchanging portion 22a, the Rankine cycle sub-cooler 22c liquefies such Rankine cycle working fluid. The Rankine cycle working fluid is then introduced from the Rankine cycle sub-cooler 22c into the pump 25.

The refrigeration cycle condenser 32 has a refrigeration cycle sub-cooler 32c, which is formed in a lower portion of the refrigeration cycle condenser 32. The refrigeration cycle heat exchanging portion 32a, the two header tanks 32b, and the refrigeration cycle sub-cooler 32c are integral. The refrigeration cycle sub-cooler 32c and the refrigeration cycle receiver 33 are connected together through a communication passage 32d. The refrigeration cycle condenser 32 subjects the refrigeration cycle working fluid to heat exchange through the refrigeration cycle heat exchanging portion 32a. The refrigeration cycle working fluid then flows into the two header tanks 32b and is supplied to the refrigeration cycle sub-cooler 32c via the refrigeration cycle receiver 33. The refrigeration cycle sub-cooler 32c cools the refrigeration cycle working fluid to improve refrigerating performance in the refrigeration cycle circuit 30. The refrigeration cycle working fluid is then introduced from the refrigeration cycle sub-cooler 32c into the expansion valve 35.

The second embodiment has the advantage described below, in addition to the same advantages as the advantages (1) to (7) of the first embodiment.
(8) The Rankine cycle sub-cooler 22c cools Rankine cycle working fluid before the Rankine cycle working fluid enters the pump 25. This prevents the gas generated through either re-heating of the Rankine cycle working fluid at the inlet of the pump 25 or suction pressure loss from being supplied to the pump 25. The volume efficiency of the pump 25 is thus maintained without decreasing.

The illustrated embodiments may be modified to the forms described below.

As shown in Fig. 4, the Rankine cycle receiver 23 may be arranged at a position outward of the right ends of the condensers 22, 32 in the vehicle width direction and forward of the condensers 22, 32. In this case, the refrigeration cycle receiver 33 is located at a position outward of the left ends of the condensers 22, 32 in the vehicle width direction and forward of the condensers 22, 32.

With reference to Fig. 5, the Rankine cycle receiver 23 may be arranged at a position outward of the right ends of the condensers 22, 32 in the vehicle width direction and rearward of the condensers 22, 32. In this case, the refrigeration cycle receiver 33 is located at a position outward of the left ends of the condensers 22, 32 in the vehicle width direction and rearward of the condensers 22, 32.

The Rankine cycle receiver 23 may be arranged at a position that is outward of the right end of each condenser 22, 32 in the vehicle width direction and on one of the front side and the rear side of the condenser 22, 32. In this case, the refrigeration cycle receiver 33 is located at a position that is outward of the left end of the condenser 22, 32 in the vehicle width direction and on the other one of the front side and the rear side of the condenser 22, 32.

In the illustrated embodiments, the Rankine cycle receiver 23 is arranged outward of the right ends of the condensers 22, 32 in the vehicle width direction and the refrigeration cycle receiver 33 is located outward of the left ends of the condensers 22, 32. However, the rightward-leftward positions of the Rankine cycle receiver 23 and the refrigeration cycle receiver 33 may be reversed.

In the second embodiment, only the Rankine cycle condenser 22 may include the Rankine cycle sub-cooler 22c. That is, the refrigeration cycle condenser 32 does not necessarily have to include the refrigeration cycle sub-cooler 32c.

Although the refrigeration cycle condenser 32 is arranged side by side with and above the Rankine cycle condenser 22 in the illustrated embodiments, the positions of the condensers 32, 22 may be reversed. In other words, the Rankine cycle condenser 22 may be arranged side by side with and above the refrigeration cycle condenser 32.

The present invention provides a Rankine cycle apparatus that is mounted in a vehicle and includes a Rankine cycle circuit and a refrigeration cycle circuit. The Rankine cycle circuit and the refrigeration cycle circuit each include a condenser for cooling a corresponding type of working fluid and a receiver, which is connected to the condenser. The two condensers are arranged side by side in the upward-downward direction and each have a first end and a second end in the vehicle width direction. A first receiver, which is one of the receivers, is arranged outward of the first end in the vehicle width direction. A second receiver, which is the other one of the receivers, is located outward of the second end in the vehicle width direction.

## Claims

1. A Rankine cycle apparatus (11) that is mounted in a vehicle, the Rankine cycle apparatus comprising a Rankine cycle circuit (20) and a refrigeration cycle circuit (30), wherein
the Rankine cycle circuit (20) includes:
a Rankine cycle condenser (22) for cooling a Rankine cycle working fluid; and
a Rankine cycle receiver (23) connected to the Rankine cycle condenser,
the refrigeration cycle circuit (30) includes:
a refrigeration cycle condenser (32) for cooling a refrigeration cycle working fluid; and
a refrigeration cycle receiver (33) connected to the refrigeration cycle condenser,
the two condensers (22, 32) are arranged side by side in an upward-downward direction, the condensers each have a first end and a second end in a vehicle width direction, and a first receiver, which is one of the receivers (23, 33), is arranged outward of the first end in the vehicle width direction, and a second receiver, which is the other one of the receivers, is located outward of the second end in the vehicle width direction.

2. The Rankine cycle apparatus (11) according to claim 1, wherein a reference plane (N) extending through the two condensers (22, 32) in the vehicle width direction extends through the first and second receivers (23, 33).

3. The Rankine cycle apparatus (11) according to claim 1 or 2, wherein
the condensers (22, 32) each include a heat exchanging portion (22a, 32a) and a pair of header tanks (22b, 32b) arranged on opposite sides of the heat exchanging portion in the vehicle width direction,
the first receiver (23, 33) is arranged outward of the header tank (22b, 32b) corresponding to the first end in the vehicle width direction, and
the second receiver (23, 33) is located outward of the header tank (22b, 32b) corresponding to the second end in the vehicle width direction.

4. The Rankine cycle apparatus (11) according to any one of claims 1 to 3, wherein the Rankine cycle condenser (22) integrally includes a sub-cooler (22c).

5. The Rankine cycle apparatus (11) according to any one of claims 1 to 4, wherein the refrigeration cycle condenser (32) integrally includes a sub-cooler (32c).
